# DEMANDE DE BREVET EUROPEEN

(11) **EP 2 522 506 A1**
(43) Date de publication de la demande: **14.11.2012**
(21) Numéro de dépôt: 12167519.3
(22) Date de dépôt: 10.05.2012
(51) Int. Cl.: B32B 27/32, B65B 53/02, B65D 65/40, C08J 5/18

(54) **Nouveau film thermo-rétractable à base de polypropylène**

(30) Priorité: 10.05.2011 FR 1153995
(71) Demandeur: S.A. Granger Freres, 43600 Sainte Sigolene (FR)
(72) Inventeur: Granger, Gaston, 43600 SAINTE SIGOLENE (FR)
(74) Mandataire: Sarlin, Laure V.

(57) **Abrégé**

La présente invention concerne un film thermo-rétractable comprenant au moins trois couches de polymère, caractérisé en ce qu'il comporte deux couches externes composées d'un polypropylène copolymère ou d'un mélange de polypropylènes copolymères, et une couche centrale, emprisonnée entre les deux couches externes, ladite couche centrale étant composée d'un mélange de polyéthylène radicalaire et de polyéthylène linéaire, son utilisation pour l'emballage et le regroupement de produits, ainsi que son procédé de fabrication.

## Description

La présente invention concerne le domaine général des films thermoplastiques, destinés en particulier au domaine de l'emballage. Plus précisément, l'invention concerne un nouveau film thermoplastique destiné à être utilisé pour le regroupement de produits, et notamment de bouteilles ou canettes, son procédé de préparation, ainsi que son utilisation pour le regroupement de produits en pack.

Sur le marché des films destinés au regroupement en pack (nommé également fardelage) de produits du type boites, briques, canettes, ou bouteilles, les acteurs ont, actuellement, trois préoccupations principales : la réduction des coûts, la préservation de l'environnement et l'augmentation des cadences machines. Ces films qui sont généralement de forme multi-couches, sont le plus souvent à base de polyéthylène.

De tels films d'emballage en polyéthylène, thermo-rétractables, sont généralement réalisés par monoextrusion ou coextrusion au moyen d'une machine d'extrusion-gonfflage. Le film de polyéthylène est extrudé dans une filière annulaire et est gonflé pour former un tube, encore appelée ballon, qui est étiré dans le sens de la longueur par un système d'étirage et dans le sens transversal par gonflage. Le tube obtenu est ensuite remis à plat, découpé puis enroulé.

Lors de l'emballage et du regroupement de produits, le film est ensuite disposé autour du groupement de produits à emballer et l'ensemble est placé dans un four de rétraction à une température appropriée pour que le film se rétracte autour des produits de manière à les serrer et à donner sa cohésion au regroupement.

Pour certaines applications, notamment pour le regroupement de bouteilles ou cannettes, il est recherché des films thermo-rétractables dits de « haute brillance ». De tels films peuvent être obtenus par co-extrusion de trois couches. Par exemple, de tels films peuvent comprendre une couche centrale constituée majoritairement de polyéthylène radicalaire prise en sandwich entre deux couches de polyéthylène spécial très brillant, constituées majoritairement de polyéthylène linéaire obtenu par synthèse métallocène (polyéthylène linéaire métallocène). Pour l'obtention de la brillance souhaitée l'utilisation de polyéthylène radicalaire avec des grades élevés est également proposée.

Afin de réduire les coûts, il est généralement proposé de réduire les épaisseurs des films. Le problème, cependant, est que la réduction d'épaisseur entraine souvent une baisse des propriétés mécaniques des films, les rendant incompatibles avec l'application visée. En effet, outre la résistance aux charges emballées, de tels films pour pouvoir être utilisés sur des lignes de fardelage, doivent présenter une rigidité suffisante, afin de permettre leur manipulation sur des machines à haute cadence, notamment.

Au début des années 2000, l'épaisseur des films thermoplastiques destinés à être utilisés pour le regroupement de bouteilles ou canettes en pack se situait autour de 60 µm. Aujourd'hui, cette épaisseur est généralement de l'ordre de 45 à 50 µm.

Dans le but de réduire l'épaisseur, différentes solutions ont été proposées. La demande de brevet EP 1 717 021 décrit, par exemple, un film thermorétractable, de haute clarté et de haute rigidité, présentant une contrainte au seuil d'écoulement supérieure à 15,5 N/mm² dans les sens machine et travers, comprenant :
- une couche centrale comprenant du polyéthylène basse densité radicalaire et du polyéthylène haute densité,
- prise en sandwich entre deux couches externes, chacune des couches externes comprenant au moins 50% en poids, par rapport au poids total de la couche, de polyéthylène linéaire, et ayant une épaisseur représentant de 5 à 25% de l'épaisseur totale du film.

Le brevet FR 2 769 918 propose, de son côté, un film comprenant une couche constituée de polypropylène, et en particulier d'un mélange d'un homopolymère de polypropylène et d'un homopolymère de polypropylène ayant été traité de manière à former un polypropylène ramifié. Néanmoins, il est indiqué dans ce document que le polypropylène ayant un aspect plutôt mat, on évite, pour des raisons esthétiques essentiellement liées au marketing des produits, de l'utiliser tel quel. II est donc proposé, dans le document FR 2 769 918 de positionner la couche de polypropylène en sandwich entre deux couches additionnelles, chacune constituée d'un mélange contenant de 80% à 95% de métallocène et de 5% à 20% de polyéthylène et de préférence 90% de métallocène et 10% de polyéthylène.

Par ailleurs, il convient de souligner que les packs de bouteilles ou de canettes formés grâce à des films thermo-rétractables sont le plus souvent regroupés en palette pour leur stockage et leur transport. Pour cela, des suremballages ou gaines palette rétractables sont utilisées pour assurer leur regroupement. Aujourd'hui, afin d'éviter que ces suremballages ou gaines n'adhèrent sur le film formant le pack, ces suremballages ou gaines comportent une couche intérieure différente de celle du film utilisé pour le pack. Ceci permet d'éviter que la gaine ou le suremballage ne colle au film formant le pack lors de sa montée en température assurant sa rétraction. Des matières anti collantes sont également utilisées sur la face interne de la gaine ou du suremballage, afin d'éviter que les films ne s'arrachent, lors de l'étape de déhoussage. En tant que matière anti-collante, des ionomères, qui sont le plus souvent deux à trois fois plus chers que les polyéthylènes standards, sont généralement utilisés, ce qui vient ainsi grever le prix des gaines et suremballages et n'est donc pas sans poser de problèmes.

Dans ce contexte, un des objectifs de la présente invention est de proposer un film compatible, en particulier, avec des épaisseurs de l'ordre de 40µm, voire moins, tout en conservant des caractéristiques mécaniques comparables aux films actuels et donc compatibles avec le regroupement de produits lourds du type boites, briques, canettes, ou bouteilles.

Un autre objectif de l'invention est de réduire encore les couts globaux. Dans ce contexte, l'invention propose de s'affranchir de l'utilisation de matières anti collantes pour les suremballages ou gaines palette rétractables qui doivent être utilisées pour le regroupement des packs de bouteilles ou de canettes, en fournissant un film thermo-rétractable compatible avec des suremballages ou gaines standards qui s'affranchisse des risques d'adhésion.

La présente invention a donc pour objet un film thermo-rétractable comprenant au moins trois couches de polymère : deux couches externes et au moins une couche dite centrale située entre les deux couches externes, les deux couches externes étant composées d'un ou plusieurs polypropylènes copolymères et la couche centrale étant composée d'un mélange de polyéthylène radicalaire et de polyéthylène linéaire.

Dans le cadre de l'invention, les couches externes sont essentiellement constituées d'un polypropylène copolymère ou d'un mélange de polypropylènes copolymères. Le ou les polypropylènes copolymères représente, en particulier, au moins 90% en masse de la masse totale de chaque couche externe, et, de préférence, au moins 95%, préférentiellement au moins 97%, voire 100% en masse de la masse totale de chaque couche externe.

Par exemple, le ou les copolymères de polypropylène présent(s) dans les couches externes sont des copolymères statistiques. Il peut notamment s'agir de copolymères de propylène/éthylène, et, de façon avantageuse, de copolymères de polypropylène, et en particulier de propylène/éthylène, obtenus par polymérisation sous catalyse métallocène. Les copolymères de polypropylène fabriqués sous catalyse métallocène qui permet une maitrise fine des tailles de séquences de polypropylène et de l'autre polymère (notamment de polyéthylène dans le cas d'un copolymère PP/PE), présentent une plus grande clarté que les copolymères préparés selon une autre voie et sont donc préférés. Il est ainsi possible d'obtenir la brillance souhaitée. La mise en oeuvre de tels polymères préparés sous catalyse métallocène a également un impact sur la compatibilité des autres constituants du film pour avoir les performances souhaitées.

Il est possible d'utiliser un mélange de différents polypropylènes copolymères qui apportent un compromis de performances mécaniques et optiques. De préférence, le film selon l'invention présente une brillance supérieure ou égale à 75, de préférence supérieure ou égale à 95, ces valeurs étant exprimées en valeur absolue. L'homme du métier choisira, donc de préférence, d'utiliser au moins un copolymère de polypropylène présent en proportions adéquates, pour obtenir une telle brillance. La brillance peut être mesurée selon la norme ASTM D2457 avec une mesure sous un angle de 60°.

Par exemple, les couches externes peuvent être constituées d'un mélange d'un copolymère de polypropylène, par exemple le Clyrell® RC 1314 ou RC 124 H commercialisé par la société LYONDELLBASELL, et représentant, par exemple, de 50 à 90 % en masse, et de préférence de 60 à 80 % en masse de la couche externe et d'un co-polymère de polypropylène, par exemple le Clyrell® RC 1890 également commercialisé par la société LYONDELLBASELL, et représentant, par exemple, de 10 à 50 % en masse, et de préférence de 20 à 40 % en masse de la couche externe. Le(s)dit(s) co-polymère(s) de polypropylène est(sont), de préférence, d'un grade variant de 1,5 à 3,5, de préférence de 1,5 à 2,5 ou de 1,7 à 2,5. Les grades donnés dans le cadre de l'invention peuvent être déterminés selon la norme ISO 1133 (230°C/2,16Kg).

Le(s)dit(s) copolymère(s) de polypropylène apportent, en outre, sa rigidité et sa résistance mécanique au film. Le(s)dit(s) copolymère(s) de polypropylène présente(nt), de façon avantageuse, un module de traction (en anglais « tensile grade ») de 500 à 1200 MPa, ce qui est bien supérieur au module de traction d'un polyéthylène basse densité (PEBD) radicalaire classique qui est typiquement de 300 MPa. Dans le cadre de l'invention, le module de traction est déterminé selon la norme ISO 527-1.

En particulier, le Clyrell® RC 124 H est caractérisé par un module de traction de 750MPa, un grade de 2,2 et une densité de 0,90 et le Clyrell® RC 1890 est caractérisé par un module de traction de 500MPa, un grade de 1,7 et une densité de 0,90.

Le fait d'utiliser en surface du film des couches de polypropylène copolymère, au lieu de couches de polyéthylène, permet de réduire les épaisseurs, tout en conservant des propriétés mécaniques satisfaisantes, du fait de la rigidité des polypropylènes copolymères. Par ailleurs, le polypropylène qui se trouve en surface assure une fonction anti-adhésive par rapport aux gaines ou suremballages en polyéthylène, généralement positionnées sur les packs de bouteilles ou de canettes formés grâce aux films thermo-rétractables selon l'invention.

Le film thermo-rétractable selon l'invention comporte au moins une couche centrale et selon un mode de réalisation particulier, une seule couche centrale, emprisonnée entre les deux couches externes. Ladite couche centrale est composée d'un mélange de un ou plusieurs polyéthylènes radicalaires et de un ou plusieurs polyéthylènes linéaires. Le polyéthylène linéaire peut être un homopolymère ou, de préférence, un copolymère et est, notamment, un copolymère éthylène/hexène tel que, par exemple, l'ENABLE® 35-05CH commercialisé par la société EXXON. Il est également possible d'utiliser un copolymère éthylène/butène ou éthylène/octène. Ces copolymères éthylène/hexène, éthylène/butène ou éthylène/octène sont, notamment, des copolymères linéaires. A titre d'exemple de tels copolymères, autre que l'ENABLE® 35-05CH qui peuvent être utilisés dans le cadre de l'invention, on peut citer les copolymères linéaires éthylène/octène, par exemple commercialisés par la société POLIMERI, les polymères d'octène ou d'hexène, par exemple commercialisés par la société INEOS tel que le LL6608 U. Le polyéthylène linéaire, qui est, de préférence, un copolymère éthylène/hexène, a, par exemple, une densité qui appartient à la gamme allant de 0,918 à 0,960, et de préférence de 0,925 à 0,938. Un tel polyéthylène est, de préférence, d'un grade variant de 0,3 à 4, de préférence de 0,5 à 2. Le polyéthylène radicalaire, quant à lui, est, de préférence, un polyéthylène basse densité dont la densité appartient à la gamme allant de 0,920 à 0,930, et de préférence de 0,923 à 0,929. Un tel polyéthylène est, de préférence, d'un grade variant de 0,3 à 1, de préférence de 0,3 à 0,8. A titre d'exemple d'un tel polyéthylène radicalaire basse densité, on peut citer le Lupolen® 3010D commercialisé par la société LYONDELLBASELL.

Selon un mode de réalisation particulier, la couche centrale comprend de 30 à 80 % en masse, et de préférence de 40 à 70 % en masse de polyéthylène radicalaire tel que précédemment défini et de 20 à 70 % en masse, et de préférence de 30 à 60 % en masse de polyéthylène linéaire tel que précédemment défini. Ces pourcentages massiques sont donnés par rapport à la masse totale de ladite couche centrale. Le choix des polymères et de leur proportion sera adapté par l'homme du métier de manière à obtenir une résistance à la déchirure et au poinçonnement satisfaisante.

Des additifs pourront être présents dans toutes ou certaines seulement des couches. En particulier, des additifs du type agents de glissement (qui ont pour but d'abaisser le coefficient de friction, pour faciliter le passage sur la ligne de fardelage) ou agents antistatiques (qui ont pour but de rendre la surface du film conductrice améliorant ainsi la dissipation des charges électrostatiques) pourront être incorporés aux polymères.

Il est, notamment, possible d'utiliser dans chacune des couches, de 1 à 3% en masse (pourcentage exprimés par rapport à la masse totale de la couche concernée) d'agents glissants. A titre d'exemples d'agent de glissement, on peut citer les érucamides. Par ailleurs, la couche centrale pourra, par exemple, comporter de 1 à 3% en masse (pourcentage exprimés par rapport à la masse totale de la couche centrale) d'agents antistatiques. A titre d'exemples d'agent antistatiques, on peut citer les amines éthoxylées.

Selon un mode de réalisation préféré pouvant être combiné aux précédents, les deux couches externes sont identiques, c'est-à-dire de même composition et de même épaisseur, de manière à faciliter le collage du film sur lui-même.

Il est possible, dans le cadre de l'invention, notamment en utilisant les copolymères de propylènes ci-dessus, que chacune des couches externes présente une épaisseur appartenant à la gamme allant de 5 à 13 µm. Par ailleurs, chacune des couches externes a, par exemple, une épaisseur correspondant de 15% à 30% de l'épaisseur totale du film et, de préférence, de 20% à 25%. Bien entendu, indépendamment de la réduction d'épaisseur souhaitée, l'épaisseur du film sera adaptée pour répondre aux exigences mécaniques requises pour l'application spécifique visée, et notamment à la masse des produits à regrouper.

Dans le cadre de l'invention, il est possible d'obtenir un film thermo-rétractable qui présente une épaisseur inférieure à 45 µm, voire inférieure ou égale à 40 µm, et notamment une épaisseur de 25 à 40 µm, ou de 30 à 40 µm, et par exemple de l'ordre de 40 ou 35 µm, voire moins.

Le film selon l'invention est dit thermo-rétractable car il se rétracte notamment sous l'action d'un chauffage, par exemple à une température appartenant à la gamme allant de 160 à 250°C qui correspond à la température ambiante dans les fours utilisés lors du regroupement des produits. De tels films sont obtenus par extrusion dans une direction donnée et, pour être compatible avec les opérations de fardelage, ils sont thermo-rétractables, à la fois dans la direction d'extrusion et dans la direction transversale à la direction d'extrusion. En particulier, le taux de rétraction longitudinale d'un film selon l'invention dans la direction d'extrusion appartient à la gamme allant de 50% à 90%, de préférence, à la gamme allant de 60% à 80% et son taux de rétraction transversale dans la direction transversale à la direction d'extrusion appartient à la gamme allant de 10% à 40%, de préférence, à la gamme allant de 20% à 30%. Dans le cadre de l'invention, ces taux de rétraction sont déterminés selon la norme ISO 11501, la thermorétractation étant mesurée alors que le film est placé dans un bain d'huile, de préférence à 135° C.

Le film selon l'invention est obtenu par co-extrusion-gonflage, technique bien connue de l'homme du métier permettant de conduire à de tels taux de rétraction. En particulier, un étirage par co-extrusion gonflage pourra être réalisé avec un taux d'étirage longitudinal de 5 à 20.

Pour cela, le ou les composants de chacune des couches est(sont) mis en fusion et mélangé(s), chacun(s) dans une extrudeuse. L'extrusion gonflage s'effectue en plusieurs étapes. Les polyoléfines sélectionnées sont chauffées dans une extrudeuse. Les polymères constitutifs de chaque film extrudés, sortent de la tête de l'extrudeuse et forment alors une gaine dont on pince l'extrémité à une distance donnée de ladite tête.

La gaine est alors gonflée. Le taux de gonflage est, par exemple de 2 à 5, de préférence de 3 à 4. La gaine est étirée par entrainement à son extrémité, par exemple par un jeu de rouleaux et par l'opération de gonflage et est refroidie à l'air. Au niveau du tirage vertical la température est le plus souvent comprise entre 40 et 70°C. Un refroidissement complémentaire est ensuite assuré lors du convoyage de la gaine vers les enrouleurs. Le taux de gonflage qui correspond au diamètre de la gaine/diamètre de la filière de l'extrudeuse détermine, avec le choix des polymères qui constituent le film, les valeurs des taux de rétraction longitudinale et transversale et en particulier, le taux de rétraction transversale.

Dans le cadre de l'invention, la sélection et le dosage relatif des polyéthylènes radicalaire et linéaire dans la couche centrale, ainsi que le taux de gonflage lors de l'extrusion, vont permettre d'atteindre les propriétés requises particulièrement adaptées pour le regroupement de produits lourds, en termes de résistance à la déchirure et taux de rétractation. Il est notamment possible d'obtenir des résistances à la déchirure de l'ordre de 200 mN. De telles résistances peuvent être mesurées selon la norme NF EN ISO 6383/2.

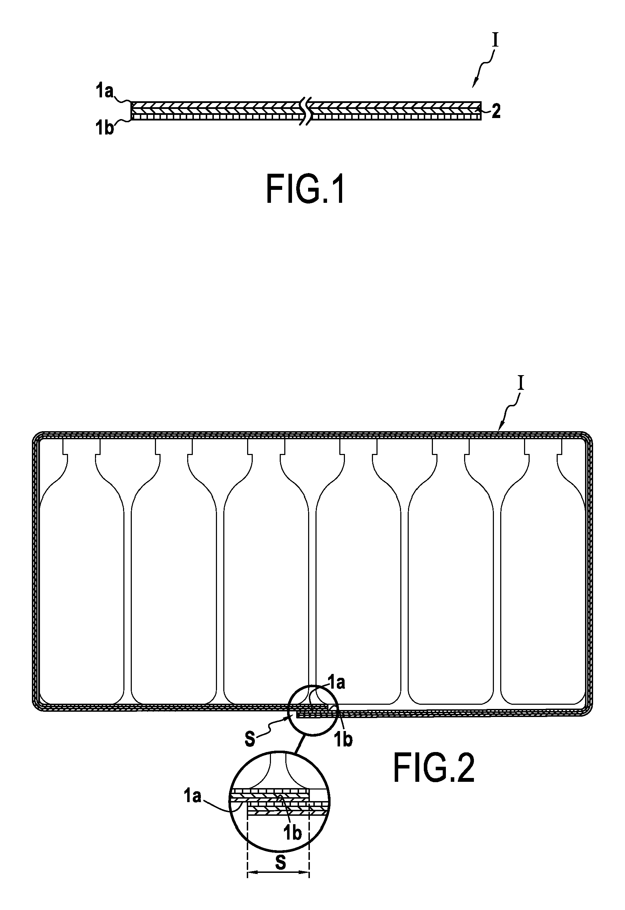

La **Figure 1** représente, de façon schématique, une vue en coupe d'un film **I** comportant trois couches. Deux couches externes **1a** et **1b** constituées de polypropylène copolymère et une couche centrale **2** prise en sandwich entre les deux couches externes **1a** et **1b.** Les différents composants de ces couches sont tels que définis précédemment. Toutes les couches sont liées du fait de l'extrusion et de la compatibilité des matériaux qui les constituent. Il est également possible d'envisager d'autres couches additionnelles emprisonnées entre les deux couches externes **1a** et **1b,** par exemple des couches d'adhésifs.

De façon avantageuse, le film selon l'invention présente de bonnes propriétés mécaniques. En particulier, il présente une contrainte à 10% d'allongement supérieure à 17 MPa, de préférence supérieure à 20 MPa dans la direction d'extrusion et supérieure à 17 MPa dans la direction transversale à la direction d'extrusion, alors qu'un film de PEBD radicalaire classique présente typiquement une contrainte à 10% d'allongement de l'ordre de 13 MPa dans la direction d'extrusion et de l'ordre de 15 MPa dans la direction transversale. La contrainte peut être mesurée selon la norme ISO 527/3, sur des éprouvettes normalisées de film. Selon cette norme, on mesure l'allongement du film pour une force croissante de traction appliquée au film (mesurée en MPa) et une vitesse normalisée.

Selon un autre de ses aspects, l'invention concerne l'utilisation d'un film tel que précédemment défini pour l'emballage et le regroupement de produits, en particulier de bouteilles et de canettes.

Lors d'une telle utilisation le film est disposé autour du groupement de produits à emballer et l'ensemble est placé dans un four de rétraction à une température appropriée pour que le film se rétracte autour des produits de manière à les serrer et à donner sa cohésion au regroupement.

Les films thermo-rétractables selon l'invention pourront être utilisés sous une forme imprimée ou vierge, afin de constituer des packs de produits, et en particulier de bouteilles ou de canettes. Pour cela, le film est découpé, enroulé autour d'un pack de bouteilles ou cannettes. Au niveau de la jointure du film, le film est thermo-adhéré. Comme illustré **Figure 2**, qui représente une vue schématique en coupe d'un regroupement de bouteilles réalisé avec le film selon l'invention, la thermo-adhésion est réalisée sur une zone de soudure **S** entre la face supérieure (correspondant à **1b** sur l'exemple illustré) de l'extrémité du film se trouvant le plus à l'extérieur et la face inférieure (correspondant à **1a** sur l'exemple illustré) de l'autre extrémité du film se trouvant le plus à l'intérieur au niveau de cette zone de soudure, d'où l'intérêt que les deux couches **1a** et **1b** soient compatibles, et de préférence identiques. Ensuite, l'ensemble passe dans un four de rétraction, cette opération permettant de solidariser la charge et de regrouper les bouteilles et cannettes dans un minimum d'espace.

Les packs ainsi formés peuvent alors être regroupés en palettes grâce à des suremballages ou gaines, classiquement en polyéthylène. L'utilisation du film thermo-rétractable selon l'invention pour la constitution des packs permet d'éviter le recours à des suremballages ou gaines comportant une couche interne antiadhésive et conduit à une économie supplémentaire.

Les exemples ci-dessous permettent de mieux comprendre l'invention, mais n'ont aucun caractère limitatif. Différents films tricouches ont été réalisés avec une co-extrudeuse tricouche, de manière à obtenir une couche centrale épaisse associée sur chacune de ses grandes faces à une couche externe plus fine.

### Exemple 1

Diamètre filière : 450
Taux de gonflage : 3
Vitesse de tirage 36m/min

Pour la couche externe **1a** Epaisseur = 9µm
composition : 100% Clyrell® RC 1890
Température de vis = 220°
Pression en Bar : 300

Pour la couche centrale **2** Epaisseur = 22µm
Composition : 48% Lupolen® 3010D + 15% INEOS LL6608 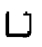 +2% VLA 66 (agent antistatique commercialisé par la société SCHULMAN) + 35% ENABLE® 35-05CH commercialisé par la société EXXON, % en masse donnés par rapport à la masse totale de la composition de la couche B
Température de vis = 215° Pression en Bar = 390

Pour la couche externe **1b** Epaisseur = 9µm
Composition : 100% Clyrell® RC 1890
Température de vis = 220°
Pression en Bar : 300

Contrainte à 10 % d'allongement : 18MPa dans la direction d'extrusion Brillance : 80

### Exemple 2

Diamètre filière 630 mm
Taux de gonflage = 2
Vitesse de tirage = 30m/min

Pour la couche externe **1a** Epaisseur = 9µm
Composition : 30% Clyrell® RC 1890 et 70% Clyrell® RC 124H
Température de vis = 220°
Pression en Bar : 320

Pour la couche centrale 2 Epaisseur = 19µm
Composition : 73% Lupolen® 3010D +2% VLA 66 + 25% ENABLE® 35-05CH commercialisé par la société EXXON, % en masse donnés par rapport à la masse totale de la composition de la couche B
Température de vis = 215° Pression en Bar = 470

Pour la couche externe **1b** Epaisseur = 9µm
mélange 30% Clyrell® RC 1890 et 70% Clyrell® RC 124 H.
Température de vis = 220°
Pression en Bar : 320
Contrainte à 10 % d'allongement : 21MPa dans la direction d'extrusion
Brillance : 100

Afin de valider l'absence de collage d'un film classique en polyéthylène basse densité sur un film selon l'invention, on procède à la formation de deux packs de 6 cannettes. Le premier à l'aide d'un film témoin classique en polyéthylène basse densité radicalaire, le second en utilisant le film de l'exemple 1 ou de l'exemple 2. Les deux packs (le témoin et celui utilisant le film selon l'invention) ainsi formés sont placés dans une étuve à 200°C pendant 1 minute, afin de reproduire le passage dans un cadre de rétraction. Dans le cas du film témoin, les deux films fusionnent entre eux, empêchant tout décollage. Dans le cas du film selon l'invention, il n'y a pas fusion entre les deux films, le film classique polyéthylène basse densité se retire sans problème.

## Revendications

1. Film thermo-rétractable comprenant au moins trois couches (**1a, 1b** et **2**) de polymère, **caractérisé en ce qu'**il comporte deux couches externes (**1a** et **1b**) composées d'un polypropylène copolymère ou d'un mélange de polypropylènes copolymères, et une couche centrale (**2**), emprisonnée entre les deux couches externes (**1a** et **1b**), ladite couche centrale (**2**) étant composée d'un mélange de polyéthylène radicalaire et de polyéthylène linéaire.

2. Film thermo-rétractable selon la revendication 1 **caractérisé en ce que** le(s) copolymère(s) de polypropylène est(sont) obtenu(s) par polymérisation sous catalyse métallocène.

3. Film thermo-rétractable selon la revendication 1 ou 2 **caractérisé en ce que** le(s) copolymère(s) de polypropylène est(sont) un copolymère propylène/éthylène.

4. Film thermo-rétractable selon l'une des revendications précédentes **caractérisé en ce que** le(s) copolymère(s) de polypropylène présente(nt) un module de traction de 500 à 1200 MPa.

5. Film thermo-rétractable selon l'une des revendications précédentes **caractérisé en ce que** le(s) co-polymère(s) de polypropylène des deux couches externes (**1a** et **1b**) est (sont) d'un grade variant de 1,5 à 3,5, ou de 1,7 à 2,5.

6. Film thermo-rétractable selon l'une des revendications 1 à 5 **caractérisé en ce que** le polyéthylène linéaire est un copolymère éthylène/hexène.

7. Film thermo-rétractable selon l'une des revendications 1 à 6 **caractérisé en ce que** la couche centrale (**2**) comprend de 30 à 80 % en masse, et de préférence de 40 à 70 % en masse, de polyéthylène radicalaire et de 20 à 70 % en masse, et de préférence de 30 à 60 % en masse, de polyéthylène linéaire.

8. Film thermo-rétractable selon l'une des revendications précédentes **caractérisé en ce que** les deux couches externes (**1a** et **1b**) sont identiques.

9. Film thermo-rétractable selon l'une des revendications précédentes **caractérisé en ce que** chacune des couches externes (**1a** et **1b**) présente une épaisseur appartenant à la gamme allant de 5 à 13 µm.

10. Film thermo-rétractable selon l'une des revendications précédentes **caractérisé en ce qu'**il présente une épaisseur inférieure à 45 µm, voire inférieure ou égale à 40 µm.

11. Film thermo-rétractable selon l'une des revendications précédentes **caractérisé en ce qu'**il est obtenu par extrusion dans une direction donnée et **en ce qu'**il est thermo-rétractable, à 1a fois dans la direction d'extrusion et dans la direction transversale à la direction d'extrusion et **en ce que** le taux de rétraction longitudinale dudit film dans la direction d'extrusion appartient à la gamme allant de 50% à 90%, de préférence, à la gamme allant de 60% à 80% et **en ce que** le taux de rétraction transversale dudit film dans la direction transversale à la direction d'extrusion appartient à la gamme allant de 10% à 40%, de préférence, à la gamme allant de 20% à 30%.

12. Film thermo-rétractable selon l'une des revendications précédentes **caractérisé en ce qu'**il présente une contrainte à 10 % d'allongement supérieure à 17 MPa, et de préférence supérieure à 20 MPa, dans la direction d'extrusion et supérieure à 17 MPa dans la direction transversale à la direction d'extrusion.

13. Film thermo-rétractable selon l'une des revendications précédentes **caractérisé en ce qu'**il est obtenu par co-extrusion-gonflage.

14. Utilisation d'un film selon l'une des revendications précédentes pour l'emballage et le regroupement de produits, et notamment de bouteilles ou cannettes.

15. Utilisation selon la revendication 14 **caractérisé en ce que** le film est disposé autour du groupement de produits à emballer et l'ensemble est placé dans un four de rétraction à une température appropriée pour que le film se rétracte autour des produits, de manière à les serrer et à donner sa cohésion au regroupement.

16. Procédé de fabrication d'un film selon l'une des revendications 1 à 13, **caractérisé en ce que** le film est obtenu par co-extrusion-gonflage.

17. Procédé selon la revendication 16, **caractérisé en ce que** le taux de gonflage est de 2 à 5, de préférence de 3 à 4.
